# EUROPEAN PATENT SPECIFICATION

(11) **EP 3 286 467 B1**
(45) Date of publication and mention of the grant of the patent: **13.03.2019**
(21) Application number: 16735730.0
(22) Date of filing: 22.04.2016
(51) Int. Cl.: F16K 31/06, F16K 1/44

(54) **A PURGE CONTROL SYSTEM FOR DISCHARGING SOLIDS COMPRISED IN A FLUID AS WELL AS A CORRESPONDING METHOD**
SPÜLUNGSSTEUERUNGSSYSTEM ZUR BESEITIGUNG VON FESTSTOFFEN IN EINER FLÜSSIGKEIT SOWIE EIN ZUGEHÖRIGES VERFAHREN
SYSTÈME DE COMMANDE DE PURGE PERMETTANT D'ÉVACUER DES MATIÈRES SOLIDES CONTENUES DANS UN FLUIDE AINSI QUE PROCÉDÉ CORRESPONDANT

(30) Priority: 24.04.2015 NL 2014711
(43) Date of publication of application: 28.02.2018
(73) Proprietor: GEHA-HOLLAND B.V., 7833 HN Nieuw Amsterdam (NL)
(72) Inventor: WOLTERINCK, Antonius Johannes Maria, 7833 HN NIEUW AMSTERDAM (NL)
(74) Representative: Algemeen Octrooi- en Merkenbureau B.V.
(86) International application number: PCT/NL2016/050288
(87) International publication number: WO 2016/171560

(56) References cited:
- DE-A1-102005 050 276
- DE-U1- 20 302 911
- US-A- 3 669 315
- US-A1- 2004 255 916

## Description

The present invention relates to a purge control system controlling the output of a fluid in a conduit. The present invention, more specifically, relates to two valves placed subsequently after each other such that a purge control system is obtained. Typically a purge control system comprises two valves placed subsequently after each other in a vertically oriented conduit, for example a tube. Initially, the top valve is opened and the bottom valve is closed, thereby letting a fluid comprising solids to enter the inner space of the conduit between the two valves. This phase is maintained for a certain period of time such that the solids are able to sink towards the bottom valve. Then, the top valve is closed thereby enclosing the entered fluid between the two valves. Finally, the bottom valve is opened, while the top valve is kept closed, to discharge the fluid comprising the solids

DE 203 02 911 U1 discloses a control system comprising two valves placed subsequently after each other in a vertically oriented conduit in which, initially, the top valve is opened and the bottom valve is closed, thereby letting a fluid to enter the inner space of the conduit between the two valves. Then, by activation of the solenoid coil, the top valve is closed and the bottom valve is opened to discharge the fluid.

A drawback of the purge control systems relates to its mounting aspect. Presently, it is cumbersome to install the valves in the tube, which valves are arranged to open and to close. This mounting aspect is further very costly.

It is an object of the present invention to provide for a purge control system for efficiently controlling the output, i.e. purging, of a fluid in a conduit or for, for example, discharging solids comprised in a fluid.

It was the insight of the inventors that the efficiency of purge control systems can be increased by providing a longitudinal closing member in a conduit, which closing member is moveable by means of a magnetic field induced by windings surrounding the conduit.

The present invention relates to a purge control system for controlling at least a fluid in a conduit, said purge control system comprising:
- a conduit having an inlet for receiving said fluid, and having an outlet for discharging said fluid;
- an elongated closing member positioned in said conduit, and moveable with respect to said conduit, in the longitudinal direction, between a first state in which said outlet is closed, and a second state in which said outlet is opened for outputting said fluid, wherein said elongated closing member is further arranged for opening said inlet in said first state, and for closing said inlet in said second state, said elongated closing member comprising:
   - at least one arm extending radially outwardly with respect to said elongated closing member, and in sliding contact with an inner surface of said conduit,
      wherein at least a part of said elongated closing member comprises a ferromagnetic material;
- a plurality of electric windings surrounding said conduit, wherein said electric windings are arranged for, when being actuated, inducing a magnetic field operating on said ferromagnetic material for moving said elongated closing member in said elongated direction.

The present invention thus relates to a purge control system, i.e. two valves placed subsequently after each other, for discharging solids comprised in a fluid. The valves are construed by the elongated closing member as the elongated closing member fulfils two tasks. In a first state it opens the inlet and closes the outlet. In a second state it opens the outlet and closes the inlet.

In the first state the pressure of the fluid flowing into the conduit pushes the closing member in the direction of the outlet, keeping the outlet blocked, much like a "normally closed" valve. Actuating the windings exerts a force on the ferromagnetic material of the closing member, which force drives the closing member away from the outlet. This allows the closing member to move from the first state, wherein the outlet is blocked to the second wherein the outlet is open. When the actuation of the windings is terminated the closing member quickly returns to the first state under the pressure of the fluid.

Due to the incorporation of the electric windings for moving the elongated closing member in the longitudinal direction, a more efficient purge control system is obtained.

The present invention can be applied to various purge control systems, present in different kinds of process systems and/or factories such as breweries, dredging companies, cooling towers, food factories. Typically, the pressure inside these pressure control system is at least 10 Bar.

The purge control system according to the present invention is applicable to a wide variety of conduits, such as tubes or pipes, which preferably comprise a circular cross-section. To allow the solids to sink onto the outlet, the conduit is preferably positioned parallel to the direction of gravity. As such sediment is formed on and near the outlet. The volume of the solids which have sunk onto the bottom outlet is relatively small compared to the volume of fluid in the conduit. In a simple embodiment the conduit is a pipe with its longitudinal direction running in the vertical direction, such that the solids can settle onto the outlet disposed at the lower end of the pipe. Preferably the longitudinal direction of the closing member corresponds to the longitudinal direction of the conduit, i.e. parallel to the direction of gravity.

The present purge control system provides multiple advantageous over known purge control systems. The purge control system according to the present invention provides the functionality of two valves. The elongated closing member is arranged to 1) close the inlet and open the outlet, and to 2) close the outlet and open the inlet. As such, it is no longer required to provide for two different valves as the purge control system of the present invention already provides for the required functionality.

Further, the control of the purge control system is made much simpler. In the prior art, timing aspects are essential as the first valve and the second valve are each controlled separately. An enormous leak of the system may occur when both valves are controlled in such a way that a through passage is created. This drawback is solved by the present invention as the elongated closing member has the inherit property that either the inlet or the outlet is opened, and the other one is closed, respectively. This reduces any constrains on the controlling aspect thereof.

Even further, the purge control system according to the present invention is much more compact compared to the prior art purge systems. This, because a single elongated member is able to provide the functionality of two separate valves.

Another advantage is that the probability of a leakage in the system is reduced substantially. In the prior art, two valves are to be installed in a pipe, such that four flanges are required. Two flanges for each valve system. As the present purge control system is construed as a single whole, only two flanges are required, thereby reducing any leakages caused by (the number of) the flanges.

Yet another advantage is the time required to install the purge control system in a pipe. Again, the present purge control system is construed as a single whole, such that only one component is to be installed in the pipe. This in comparison to prior art system in which two separate valves are to be installed in the pipe.

The closing member, by actuating the windings, is driven towards and optionally against the inlet, to close and seal the inlet. Without actuation of the windings, the closing member is driven away from the inlet by the fluid pressure, opening the inlet. The opened inlet then corresponds to the first state, while the closed inlet corresponds to the second state. In this manner introduction of additional fluid during actuation (i.e. in the second state) is prevented to, for example, reduce fluid losses.

In embodiment, the purge control system further comprises a first permanent magnet, or an electromagnet, oriented near the outlet, and arranged for attracting the closing member in the first state for firmly closing the outlet. Corresponding magnetic parts can be provided on the closing member to increase the attraction. The permanent magnet, or the electromagnet, near the outlet in the first state provides a continuous force on the closing member, resulting in an effective sealing of the outlet by the closing member. This sealing prevents fluid from seeping through the outlet in the first state.

The above described embodiment allows the purge control system to be used in systems having a relative low operating pressure. That is, the operating pressure may not be sufficient to firmly close the outlet by pushing the closing member in the first state. The permanent magnet, or the electromagnet, helps in this regards.

In an embodiment, the purge control system further comprises a second permanent magnet, or an electromagnet, oriented near the inlet, and arranged for attracting the closing member in the second state for firmly closing the inlet. The permanent magnet, or the electromagnet, near the inlet in the second state provides a continuous force on the closing member, resulting in an effective sealing of the inlet by the closing member. This sealing prevents fluid from entering through the inlet in the second state. Optionally, the closing member, inlet and/or outlet can be provided with additional sealing means such as resilient rings or locking systems.

The above described embodiment allows the purge control system to be used in systems having a relative high operating pressure. The plurality of electric windings surrounding the conduit may not induce a magnetic field which is able to attract the elongated member in such a way that it firmly closes the inlet. As such, the permanent magnet, or the electromagnet, may aid in closing the inlet firmly.

The diameter of at least one of the inlet and the outlet may be substantially smaller compared to a diameter of a centre part of the conduit. The centre part may be wider than the outlet or inlet. The conduit can be tapered at one or either ends. Preferably the centre part is substantially straight to allow for unhindered movement of the closing member. The closing member can be provided at one or either ends with end parts which are substantially wider than the outlet and/or inlet for sealing the inlet and/or outlet.

Typically, the diameter of the inlet and/or outlet is approximately 25mm to 80mm, and the length of the conduit is typically between 150mm and 400mm.

In an embodiment, the at least one arm is coated with teflon or polyurethaan for providing the sliding contact with the inner surface of the conduit. Thus, friction between the inner surface and the arm is minimized allowing for rapid and unhindered movement of the closing member. The material teflon and polyurethaan is arranged for being resistant to the fluid to prevent corrosion or formation of additional compounds on the inner surface or on the arm. As such, in comparison with the prior art purge control systems, the invention provides for a sustained system which may be used in aggressive environment, i.e. aggressive type of fluids.

In an example the purge control system comprises three spaced arms which extend radially outwardly with respect to the elongated closing member. These arms extend between the closing member and the inner surface of the conduit to provide stability to said closing member. Preferably said arms extend in a plane substantially perpendicular to said longitudinal direction. In an advantageous embodiment the arms are additionally spaced apart from one another along the longitudinal direction of the closing member to provide additional stability.

The three arms are in sliding contact with the inner surface of the conduit for firmly positioning the closing member in the conduit. Preferably a first plurality of the arms is spaced apart along the longitudinal direction from a second plurality of the arms, wherein the arms of different pluralities are connected to one another near the inner surface of the conduit. In an embodiment, the longitudinally spaced apart arms are connected via an elongated tube or sliding element arranged for sliding on and along the inner surface. When said conduit is parallel to the vertical direction, said arms extend substantially horizontal while said tubes are vertical. In the above described manner friction between the closing member and the inner surface of the conduit is reduced, while the closing member is effectively stabilized and positioned at least during its movement. Thus a durable and robust system is achieved.

In an example, the three arms are substantially evenly distributed around an elongated axis of the elongated closing member. The arms preferably are provided at angles of preferably 120° with one another. Alternatively, n arms can be provided extending at an angle of 360/*n°* with respect to one another. Due the rotational symmetry of the arms the closing member is firmly supported in the conduit.

In an embodiment each at least one arm comprise an elongated tube, comprised of the ferromagnetic material, and oriented in the longitudinal direction, and wherein the elongated tube is in sliding contact with the inner surface of the conduit. Preferably the arms are provided in two radial planes, spaced apart from one another in the longitudinal direction. Each arm in a first radial plane is connected to a corresponding arm is a second radial plane by an elongated tube. Thus a stabilizing frame is formed around the closing member. The elongated tubes are arranged for sliding along the inner surface of the conduit in the longitudinal direction, thus guiding the movement of the closing member and preventing it from tilting. The tubes are positioned against or close to said inner surface of said conduit, where the induced magnetic field in the conduit is the strongest.

The present invention further relates to a method for discharging solids comprised in a fluid using a purge control system according to the present invention. The method comprises the step of providing the closing member in the first state such that the outlet is closed and the inlet is opened. The closing member is positioned in the conduit such that it closes the outlet to prevent fluid from discharging through the outlet. Since the fluid is pressurized, the closing member is automatically moved into the first state. No additional forces need to be applied to the closing member for it to move into the first state. In a preferred embodiment, the conduit and the closing member are oriented vertically with the outlet positioned at the bottom side of the conduit. The outlet is then below the closing member, so that in addition to the fluid pressure the closing member is driven to and kept in the first state by gravity.

The present invention also relates to a method for controlling a purge control system according to any of the previous claims, said method comprising the steps of:
- providing said closing member in said first state such that said outlet is closed and said inlet is opened;
- allowing said conduit to be filled with said fluid;
- actuating said plurality of electric windings surrounding said conduit such that an induced magnetic field operates on said ferromagnetic material for moving said elongated closing member in said elongated direction to said second state, thereby opening said outlet and closing said inlet;
- allowing said fluid in said conduit to be outputted, i.e. purged, via said opened outlet;
- moving said closing member in said longitudinal direction from said second state to said first state.

Another step according to the present invention is allowing the conduit to be filled with the fluid comprising the solids. The fluid is able to enter via the inlet which is open in the first state. Since the fluid is pressurized (i.e. is under a pressure greater than atmospheric pressure, for example between 2 and 15 bar, preferably between 10 and 15 bar), it is driven into the conduit. The fluid then fills the conduit.

Once the conduit has been filled, the fluid stops flowing into the conduit. During this step at least part of the solids in the fluid are allowed to sink and form a sediment on the bottom of the conduit near the outlet due to gravity. A user can monitor the amount of solids settled on the outlet or optionally wait a predetermined sedimentation time interval before proceeding to another step of the present invention.

A further step of the present invention comprises actuating the plurality of electric windings surrounding the conduit such that an induced magnetic field operates on the ferromagnetic material. Thereby, the elongated closing member connected to said tubes via said arms is moved in the longitudinal direction to the second state. Since the closing member moves away from the outlet, the outlet is opened. During this step the closing member is positioned to block, i.e. close, the inlet.

In a further step the fluid in the conduit, and comprising the solids, is allowed to be discharged via the opened outlet. Since during the step of actuating the outlet has been opened, the solids and fluid in the conduit are able to be discharged from the conduit through the outlet. Due to the pressure inside the conduit and due to gravity the sediment is pushed out first followed by the fluid. The fluid pressure and gravity provide a continuous downward force on the closing member, which downward force is counteracted by the induced magnetic field. The outlet is open while the windings are actuated. Preferably the closing member in the second state is positioned nearby the outlet, e.g. at a distance of circa 2 cm, to provide a relative narrow discharge opening for discharging the sediment. The narrow discharge opening allows the sediment and fluid to seep through at a slow pace. This allows a user to determine when the sediment has been discharged and when the discharging of fluid without sediment begins.

After the discharge step, the method according to the present invention comprises the step of moving the closing member in the longitudinal direction from the second state to the first state, thereby closing the outlet and opening the inlet. When the outlet is closed the remaining fluid is contained in the conduit, since the outlet is closed by the closing member after at least the sediment has been discharged through the outlet and before the conduit is fully emptied of the fluid. When the actuation ceases, the fluid pressure and gravity rapidly drive the closing member onto the outlet, nearly instantaneously closing the outlet. No additional forces are required. By controlling the duration of the step of actuating, the opening of the outlet can be adjusted to correspond to the time required for evacuating the sediment from the conduit and limit the loss of fluid. Thereby the object of the present invention is achieved.

In an embodiment the step of actuating comprises providing an electric current through the plurality of electric windings surrounding the conduit. The current induces the magnetic field substantially parallel to the longitudinal direction and arranged for moving the closing member with the ferromagnetic material. Preferably the current, and thus the magnetic field, is sufficiently large to quickly move the closing member into the second state. Ideally the current is a block pulse alternating between zero amps in the first state and a non-zero value for rapidly driving and keeping the closing member in the second state.

In an embodiment the step of actuating the closing member is maintained in the second state for a time interval corresponding to the time it takes the sediment to discharge through the outlet. This time interval can be determined experimentally or known form experience. While the windings are actuated the magnetic field exerts a force on the closing member, which force exceeds the combined forces of gravity and fluid pressure on the closing member. The electromagnetic force is preferably between 1500N - 2000N.

In an embodiment the time interval is a predetermined value based on experiments or experience.

In an embodiment the step of actuating is maintained for between 0.1 - 2 seconds, preferably between 0.1 - 1 second, even more preferably between 0.1 - 0.2 seconds. In this manner the majority of fluid in the conduit is kept contained therein, reducing fluid losses, leading to an efficient purge process.

According to the present invention, a purge control system is thus a detailed example of a valve control system. A purge control system is thus a system in which the outlet as well as the inlet can be controlled, i.e. closed and/or opened.

### BRIEF DESCRIPTION OF THE DRAWINGS

Figure 1 schematically shows a first example of a purge control system according to the present invention.
Figure 2 schematically shows an example of a valve control system not being part of the present invention.
Figures 3a-d schematically show the various steps of a method using a purge control system according to the present invention.

### DETAILED DESCRIPTION OF THE DRAWINGS

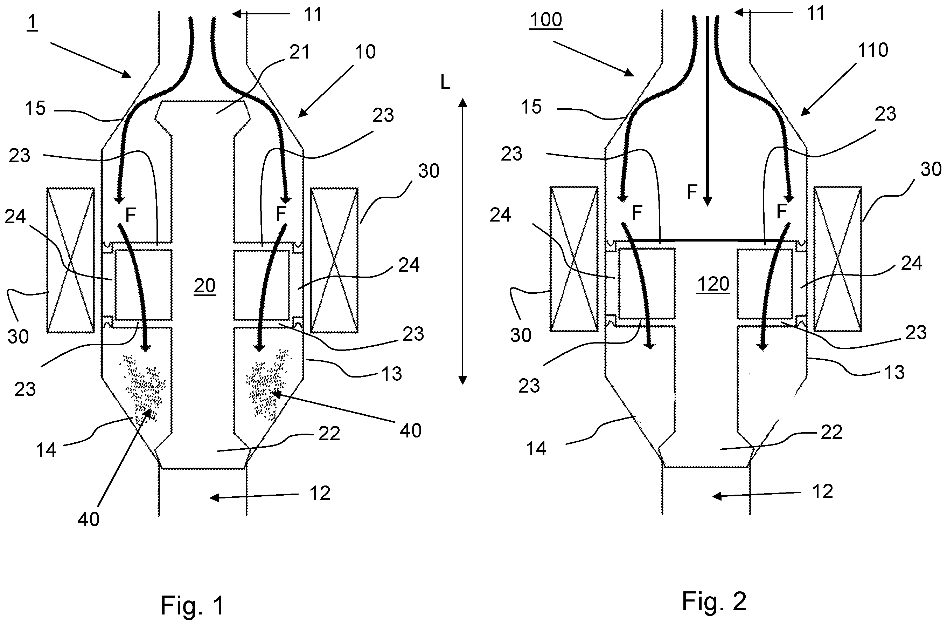

Figure 1 schematically shows a first embodiment of a purge control system 1 according to the present invention. The purge control system 1 is arranged for discharging solids comprised in a fluid. In Fig. 1 the purge control system 1 comprises a conduit 10 having an inlet 11 and an outlet 12. In the conduit 10 an elongated closing member 20 is provided between the inlet 11 and outlet 12, such that the closing member 20 is able to move in its longitudinal direction between the inlet 11 and the outlet 12. The closing member 20 comprises at least one arm 23 extending radially outward towards the inner surface of the conduit 10. A plurality of electric windings 30 surround the conduit 10.

The conduit 10 in Fig. 1 extends between an inlet 11 for receiving the fluid comprising the solids and an outlet 12 for discharging at least the solids. Fluid is able to flow into the conduit 10 via inlet 11 (indicated by arrows F). The fluid is pressurized for example up to a pressure of 12 bar. The closing member 20 is formed to allow the fluid to flow around it, as indicated by arrows F. Below the inlet 11 in Fig. 1 the conduit 10 comprises a first tapered part 15, wherein the conduit 10 is broadened with respect to the inlet 11. The first tapered part 15 connects the narrower inlet 10 to one end of a broader centre part 13 of the conduit 10. The centre part 10 in Fig. 1 is formed as a straight tube or pipe extending downwards towards the outlet 12. The centre part 13 is connected at its other end to a second tapered part 14, which is connected to the outlet 12, such that the outlet 12 is narrower in diameter than the centre part 13. In summary, the tapered parts 14, 15 allow the centre part 13 to have a greater cross-section than the inlet 11 and outlet 12. Preferably the conduit 10 has dimensions of approximately between 30mm and 150mm. In an embodiment magnets are provided near or around said inlet 11 and/or outlet 12 for attracting said closing member 20.

The elongated closing member 20 in Fig. 1 is positioned in the conduit in the first state, blocking the outlet 12. The closing member 20 is moveable with respect to the conduit 10 in the longitudinal direction L, which in Fig. 1 is the vertical direction. The closing member 20 in Fig. 1 is in its bottom position, which corresponds to the first state in which the outlet 12 is closed. In Fig. 1 the closing member 20 can be moved upwards into its second state in which the outlet 12 is opened. Since the closing member 20 is then positioned away from the outlet 12, the solids can be discharged through the outlet 12. In the embodiment in Fig. 1 the elongated closing member 20 is further arranged for opening the inlet 11 in the first state, and for closing the inlet 11 in the second state. In Fig. 1 the closing member 20 can be moved upwards into contact with the inlet 11 for blocking the inlet 11. Said closing member 20 can be partially formed of a (ferro)magnetic material for interaction with said magnets near the inlet 11 or outlet 20. This magnetic attraction provides a solid sealing of the inlet 11 and outlet 12 by the closing member 20.

The closing member 20 in the embodiment in Fig. 1 extends between the tapered parts 14, 15 and comprises at its ends end parts 21, 22 arranged for closing the inlet 11 and outlet 12. The end parts 21, 22 extend radially beyond a centre part of the closing member 20, i.e. the diameter of the end parts 21, 22 is wider than the centre part of the closing member 20. The end parts 21, 22 preferably correspond in shape and size to the inlet 11 and outlet 12, preferably slightly larger in diameter than the inlet 11 and outlet 12. In an embodiment the end parts 21, 22 are provided with a resilient material for engaging the inlet 11 and outlet 12. Within the scope of the present invention said closing member 20 can additionally be arranged for engaging said tapered parts 14, 15 for closing said inlet 11 and outlet 12.

In Fig. 1 the closing member 20 comprises one or more arms 23 extending radially outwardly from the elongated closing member 20. In Fig. 1 these arms 23 are provided on either side of the closing member 20 and positioned at a vertical distance of one another. The arms 23 are arranged for positioning and stabilizing the closing member 20 in the conduit 10 without obstructing the flow of fluid in the conduit 10. Preferably three or more arms 23 are provided in a substantially horizontal plane and radially spaced apart from one another. The arms 23 extend radially outwardly from the elongated closing member 20 towards the inner surface of the conduit 10. The arms 23 are in contact with the inner surface of the conduit 10 and are able to move in the vertical direction on and along the inner surface. In this manner the closing member 20 is stabilized in the conduit 10, while fluid is able to flow around the closing member 20.

Not shown in Fig. 1 is that the arms 23 are preferably evenly distributed around an elongated vertical axis of the elongated closing member 20. Basically when *n* arms 23 are provided in one horizontal plane, these arms 23 posses an *n*-fold symmetry, like spokes in a wheel. In Fig. 1 two vertical planes with arms 23 therein are provided above one another, but a larger number of planes can be applied within the scope of the present invention. Additional reinforcing arms connecting said arms 23 can be provided to strengthen the structure of the closing member 20.

The arms 23 in Fig. 1 extend substantially perpendicular to the longitudinal direction (i.e. horizontal in Fig. 1). The arms 23 positioned spaced apart in the longitudinal direction (vertical in Fig. 1) are connected via elongated tubes 24 oriented in the longitudinal direction. The tubes 24 form sliding elements which are arranged for moving along the inner surface of the conduit 10 with minimum friction. Hence, said tubes 24 are provided with a teflon or a polyurethaan coating. The tubes 24 and arms 23 can be formed of beams and provided with for example an O, I, H, or U profile for reinforcement. The tubes 24 comprise sufficient ferromagnetic material to exert an electromagnetically induced force on the closing member 20. Preferably the tubes 24 are formed of Fe-material.

Around the conduit 10, a plurality of electric windings 30 are provided in Fig. 1. The electric windings 30 can be actuated by an electric current (pulse) provided by a current source. Preferably the current source comprises a signal generator to accurately control the shape and duration of the current delivered to the windings 30. Thus the magnetic field generated by the windings 30 in the conduit 10 can be controlled. The magnetic field runs in the longitudinal direction L and is thus arranged for moving the closing member 20 in the upward longitudinal direction U. A force is exerted on the closing member 20 via the ferromagnetic material in the tubes 24, which material interacts with the induced magnetic field. The magnetic field is arranged for driving the ferromagnetic tubes 24 towards the inlet 11 and away from the outlet 12 (upwards in Fig. 1). The force on the tubes 24 is transmitted to the closing member 20 via the arms 23, which additionally aid in positioning and stabilizing the closing member 20 during its motion. Preferably said displacement of said closing member 20 is small, e.g. around 2 cm.

In the embodiment in Fig. 1 the closing member 20 under influence of the induced field is pushed against the inlet 11 for blocking the inlet 11. The upper end part 21 prevents fluid from entering the conduit 10 in the second state. This results in a decreasing pressure in the conduit 10 during discharging, resulting in the discharge rate decreasing over time. This allows a user to better detect when the sediment 40 has been discharged. After discharging the sediment 40 the actuation of the windings 30 via the current is stopped and the magnetic field vanishes. As a consequence of the fluid pressure and gravity on the closing member 20 it 20 is rapidly driven into the first state blocking the outlet 12. Thus the discharging of fluid is stopped and further loss of fluid is prevented.

Figure 2 schematically shows an example of a valve control system 100 not being part of the present invention.

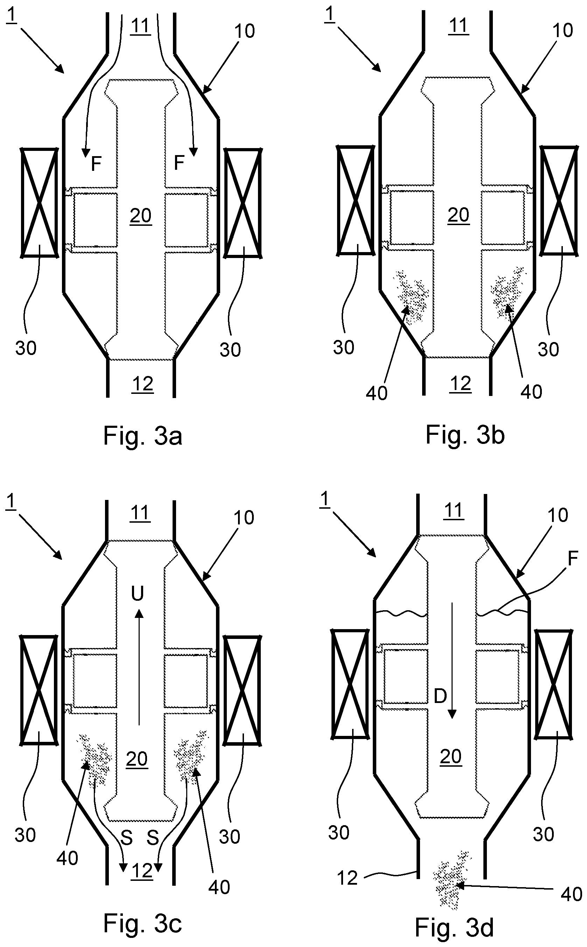

Figures 3a-d schematically show the various steps of a method using a purge control system 1 according to the present invention. The system 1 has been discussed in reference to Fig. 1. Fig. 3a illustrates the step of providing the closing member 20 in the first state such that the outlet 12 is closed. During use this step requires no action of behalf of the user, since the closing member 20 is forced onto the outlet 12 by the fluid pressure and the gravity. Advantageously this normally closed construction prevents fluid losses for example in case of electrical failures.

Fig. 3a additionally schematically illustrates the step of allowing the conduit 10 to be filled with the fluid comprising the solids. The pressurized fluid enters the conduit 10 via the inlet 11 (arrows F).

Fig. 3b illustrates the step of allowing at least part of the solids to sink for forming a sediment 40 on and/or near the outlet 12. Since no more fluid is flowing into the conduit 10, the fluid is allowed to become still. In consequence the solids, under the influence of gravity, settle onto the bottom of the conduit 10. Thus a sediment 40 is formed of these solids. The amount of sediment 40 depends on the sedimentation time and properties of the fluid and solids. When a certain amount of sediment 40 has been formed or a predetermined time has passed, the next step is initiated.

Fig. 3c schematically illustrates actuating the plurality of electric windings 30 surrounding the conduit 10 such that and induced magnetic field is formed. This field operates on the ferromagnetic material in the tubes 24, thus moving the elongated closing member 20 in the upwards direction U to the second state. The outlet 12 is then open. Additionally the closing member 20 in Fig. 3c in the second state blocks the inlet 11, preventing fluid from entering the conduit 10. Hence, there is no need for an additional purge for closing off said fluid supply. In an embodiment, an electric current is provided through the plurality of electric windings 30 surrounding the conduit 10 to induce the magnetic field. Preferably the current is shaped like a block pulse to facilitate a rapid upward movement of the closing member 20 into the second state.

While the current is provided through the windings 30, the magnetic field is maintained, keeping the closing member 20 in the second state. In this manner, the process automatically proceeds to the step of allowing the sediment 40 and part of the fluid in the conduit 10 to be discharged via the open outlet 12. This is illustrated in Fig. 3d, wherein the closing member 20 is now positioned circa 2 cm away from the outlet 12 allowing the sediment 40 and fluid to slowly seep through the outlet 12. Due to this discharging, the level F in the conduit 10 decreases. The duration of this discharging step is determined by the time interval wherein the current is provided to the windings 30. Preferably this step's duration is a predetermined time interval corresponding to previously determined optimum time window which allows for the discharging of sediment 40 but ends directly thereafter. Alternatively a sensor is provided which monitors the amount of sediment in the conduit 10 or in the discharge through the outlet 12. This sensor can for example monitor the viscosity, density, transparency or colour of the discharge to detect when the sediment 40 has been completely discharged. The sensor is then arranged to send a signal to terminate the current provided to the windings 30.

In an embodiment the conduit 10 comprises a discharge valve located near the top side of the conduit 10 to aid in the discharging process. The discharge valve can be opened to pressurize the conduit 10, e.g. by letting in air.

When the sediment 40 has been discharged the following step of moving the closing member 20 back to its first state is initiated. The closing member 20 then moves in the downward direction D from the second state to the first state, thereby closing the outlet 12. This step is performed before the conduit 10 is fully emptied of the fluid, such that the remaining fluid is contained in the conduit 10. A user can simply turn off the current provided to the windings 30 to allow the fluid pressure to push the closing member 20 back to the first state. Due the relatively large pressure forces on said closing member 20 said outlet 12 is closed nearly immediately after stopping the current.

The present invention is not limited to the embodiments as disclosed above, and can be modified and enhanced by those skilled in the art beyond the scope of the present invention as disclosed in the appended claims without having to apply inventive skills.

## Claims

1. A purge control system (1) for controlling at least a fluid in a conduit (10), said purge control system comprising:
- a conduit (10) having an inlet (11) for receiving said fluid, and having an outlet (12) for discharging said fluid;
- an elongated closing member (20) positioned in said conduit and moveable with respect to said conduit in the longitudinal direction (L), between a first state in which said outlet (12) is closed, and a second state in which said outlet (12) is opened for outputting said fluid, wherein said elongated closing member is further arranged for opening said inlet (11) in said first state, and for closing said inlet (11) in said second state,
wherein at least a part of said elongated closing member comprises a ferromagnetic material;
- a plurality of electric windings (30),
wherein said electric windings (30) are arranged for, when being actuated, inducing a magnetic field operating on said ferromagnetic material for moving said elongated closing member (20, 120) in said elongated direction (L),
**characterized in that** the elongated closing member (20) comprises at least one arm (23) extending radially outwardly with respect to said elongated closing member (20) and in sliding contact with an inner surface of said conduit (10) and **in that** the plurality of electric windings (30) surrounds said conduit (10).

2. Purge control system (1) according to claim 1, wherein said purge control system further comprises a first permanent magnet, oriented near said outlet (12), and arranged for attracting said closing member (20) in said first state for firmly closing said outlet (12).

3. Purge control system (1) according to any of the previous claims, wherein said purge control system further comprises a second permanent magnet, oriented near said inlet (11), and arranged for attracting said closing member (20) in said second state for firmly closing said inlet (11).

4. Purge control system (1) according to any of the previous claims, wherein a diameter of at least one of said inlet (11) and said outlet (12) is substantially smaller compared to a diameter of a centre part of said conduit (10).

5. Purge control system (1) according to any of the previous claims, wherein said at least one arm (23) is coated with teflon or polyurethaan for providing said sliding contact with said inner surface of said conduit (10).

6. Purge control system (1) according to any of the previous claims, wherein said purge control system comprises three spaced arms (23) extending radially outwardly with respect to said elongated closing member (20), and in sliding contact with said inner surface of said conduit (10) for firmly positioning said closing member in said conduit (10).

7. Purge control system (1) according to any of the previous claims, wherein each at least one arm (23) comprises an elongated tube (24), comprised of said ferromagnetic material, and oriented in said longitudinal direction (L), and wherein said elongated tube (24) is in sliding contact with said inner surface of said conduit (10).

8. A method for controlling a purge control system (1) according to any of the previous claims, said method comprising the steps of:
- providing said closing member (20) in said first state such that said outlet (12) is closed and said inlet (11) is opened;
- allowing said conduit (10) to be filled with said fluid;
- actuating said plurality of electric windings (30) surrounding said conduit (10, 110) such that an induced magnetic field operates on said ferromagnetic material for moving said elongated closing member in said elongated direction (L) to said second state, thereby opening said outlet (12) and closing said inlet (11);
- allowing said fluid in said conduit to be outputted via said opened outlet (12);
- moving said closing member in said longitudinal direction (L) from said second state to said first state.

9. Method according to claim 8, wherein said step of actuating comprises:
- providing an electric current through said plurality of electric windings (30) surrounding said conduit (10).

10. Method according to claim 8 or 9, wherein during said step of actuating said closing member (20) is maintained in said second state for a predetermined time interval.

11. Method according to any of the claims 8 - 10, wherein said step of actuating is maintained for between 0.1 - 10 seconds, preferably between 0.1 - 2 seconds, even more preferably between 0.1 - 0.2 seconds.

## Patentansprüche

1. Spülsteuerungssystem (1) zum Steuern mindestens einer Flüssigkeit in einer Leitung (10), wobei das System Folgendes umfasst:
- eine Leitung (10), die einen Einlass (11) zum Aufnehmen der Flüssigkeit und einen Auslass (12) zum Ablassen der Flüssigkeit aufweist;
- ein längliches Verschlussteil (20), das in der Leitung positioniert ist und in Bezug auf die Leitung in der Längsrichtung (L) beweglich ist, zwischen einem ersten Zustand, in dem der Auslass (12) geschlossen ist, und einem zweiten Zustand, in dem der Auslass (12) für das Auslassen der Flüssigkeit geöffnet ist, wobei das längliche Verschlussteil weiterhin zum Öffnen des Einlasses (11) in dem ersten Zustand und zum Schließen des Einlasses (11) in dem zweiten Zustand angeordnet ist, wobei mindestens ein Teil des länglichen Verschlussteils ein ferromagnetisches Material umfasst;
- mehrere elektrische Wicklungen (30), wobei die elektrischen Wicklungen dazu angeordnet sind, dass sie, wenn sie aktiviert werden, ein Magnetfeld induzieren, welches zum Bewegen des länglichen Verschlussteils (20, 120) in der Längsrichtung (L) das ferromagnetische Material aktiviert,
**dadurch gekennzeichnet, dass** das längliche Verschlussteil (20) mindestens einen Arm (23) umfasst, der sich in Bezug auf das längliche Verschlussteil (20) radial nach außen hin erstreckt, und sich in Gleitkontakt mit einer Innenfläche der Leitung (10) befindet, sowie dadurch, dass die mehreren elektrischen Wicklungen (30) die Leitung (10) umschließen.

2. Spülsteuerungssystem (1) nach Anspruch 1, wobei das Spülsteuerungssystem weiterhin einen ersten Dauermagneten umfasst, der nahe des Auslasses (12) orientiert ist, und zum Anziehen des Verschlussteils (20) in den ersten Zustand zum festen Schließen des Auslasses (12) angeordnet ist.

3. Spülsteuerungssystem (1) nach einem der vorangegangenen Ansprüche, wobei das Spülsteuerungssystem weiterhin einen zweiten Dauermagneten umfasst, der nahe des Einlasses (11) orientiert ist, und zum Anziehen des Verschlussteils (20) in den zweiten Zustand zum festen Schließen des Einlasses (11) angeordnet ist.

4. Spülsteuerungssystem (1) nach einem der vorangegangenen Ansprüche, wobei der Durchmesser mindestens eines der Elemente Einlass (11) bzw. Auslass (12) erheblich kleiner im Vergleich zu einem Durchmesser eines Mittelteils der Leitung (10) ist.

5. Spülsteuerungssystem (1) nach einem der vorangegangenen Ansprüche, wobei der wenigstens eine Arm (23) mit Teflon oder Polyurethan für das Bereitstellen des Gleitkontakts mit der Innenfläche der Leitung (10) beschichtet ist.

6. Spülsteuerungssystem (1) nach einem der vorangegangenen Ansprüche, wobei das Spülsteuerungssystem drei verteilte Arme (23) umfasst, die sich in Bezug auf das längliche Verschlussteil (20) radial nach außen hin erstrecken und sich zum festen Positionieren des Verschlussteils (20) in der Leitung (10) in Gleitkontakt mit der Innenfläche der Leitung (10) befinden.

7. Spülsteuerungssystem (1) nach einem der vorangegangenen Ansprüche, wobei jeweils mindestens ein Arm (23) ein längliches Rohr (24) umfasst, das aus dem ferromagnetischen Material besteht und in der Längsrichtung (L) orientiert ist, und wobei sich das längliche Rohr (24) in Gleitkontakt mit der Innenfläche der Leitung (10) befindet.

8. Verfahren für das Steuern eines Spülsteuerungssystems (1) nach einem der vorangegangenen Ansprüche, wobei das Verfahren die folgenden Schritte umfasst:
- Bereitstellen des Verschlussteils (20) in dem ersten Zustand, derart, dass der Auslass (12) geschlossen und der Einlass (11) geöffnet ist;
- Ermöglichen, dass die Leitung (10) mit der Flüssigkeit gefüllt wird;
- Betätigen der mehreren elektrischen Wicklungen (30), welche die Leitung (10, 110) umschließen, derart, dass ein induziertes magnetisches Feld für das Bewegen des länglichen Verschlussteils in der Längsrichtung (L) in den zweiten Zustand das ferromagnetische Material aktiviert, und dadurch den Auslass (12) öffnet und den Einlass (11) schließt;
- Ermöglichen, dass die Flüssigkeit in der Leitung über den geöffneten Auslass (12) ausgelassen wird;
- Bewegen des Verschlussteils in der Längsrichtung (L) aus dem zweiten Zustand in den ersten Zustand.

9. Verfahren nach Anspruch 8, wobei der Schritt des Betätigens Folgendes umfasst:
- Bereitstellen eines elektrischen Stromes durch die mehreren elektrischen Wicklungen (30), welche die Leitung (10) umschließen.

10. Verfahren nach Anspruch 8 oder 9, wobei das Verschlussteil (20) während des Schrittes des Betätigens für ein vorbestimmtes Zeitintervall in dem zweiten Zustand beibehalten wird.

11. Verfahren nach einem der Ansprüche 8 bis 10, wobei der Schritt des Betätigens für einen Zeitraum zwischen 0,1 und 10 Sekunden, bevorzugt zwischen 0,1 und 2 Sekunden und noch stärker bevorzugt zwischen 0,1 und 0,2 Sekunden beibehalten wird.

## Revendications

1. Système de commande de purge (1) pour réguler au moins un fluide dans un conduit (10), ledit système de commande de purge comprenant :
- un conduit (10) ayant une entrée (11) pour recevoir ledit fluide, et ayant une sortie (12) pour évacuer ledit fluide ;
- un élément de fermeture allongé (20) positionné dans ledit conduit et pouvant se déplacer par rapport audit conduit dans la direction longitudinale (L), entre un premier état dans lequel ladite sortie (12) est fermée, et un deuxième état dans lequel ladite sortie (12) est ouverte pour délivrer en sortie ledit fluide, où ledit élément de fermeture allongé est en outre agencé pour ouvrir ladite entrée (11) dans ledit premier état, et pour fermer ladite entrée (11) dans ledit deuxième état,
dans lequel au moins une partie dudit élément de fermeture allongé comprend un matériau ferromagnétique ;
- une pluralité d'enroulements électriques (30), où lesdits enroulements électriques (30) sont agencés, lorsqu'ils sont actionnés, pour induire un champ magnétique agissant sur ledit matériau ferromagnétique pour déplacer ledit élément de fermeture allongé (20, 120) dans ladite direction allongée (L),
**caractérisé en ce que** l'élément de fermeture allongé (20) comprend au moins un bras (23) s'étendant radialement vers l'extérieur par rapport audit élément de fermeture allongé (20) et en contact coulissant avec une surface interne dudit conduit (10) et **en ce que** la pluralité d'enroulements électriques (30) entoure ledit conduit (10).

2. Système de commande de purge (1) selon la revendication 1, dans lequel ledit système de commande de purge comprend en outre un premier aimant permanent, orienté à proximité de ladite sortie (12) et agencé pour attirer ledit élément de fermeture (20) dans ledit premier état pour fermer solidement ladite sortie (12).

3. Système de commande de purge (1) selon l'une quelconque des revendications précédentes, dans lequel ledit système de commande de purge comprend en outre un deuxième aimant permanent, orienté à proximité de ladite entrée (11), et agencé pour attirer ledit élément de fermeture (20) dans ledit deuxième état pour fermer solidement ladite entrée (11).

4. Système de commande de purge (1) selon quelconque l'une des revendications précédentes, dans lequel un diamètre d'au moins l'une de ladite entrée (11) et de ladite sortie (12) est sensiblement inférieur à un diamètre d'une partie centrale dudit conduit (10).

5. Système de commande de purge (1) selon l'une quelconque des revendications précédentes, dans lequel ledit au moins un bras (23) est revêtu de téflon ou de polyuréthane pour assurer ledit contact coulissant avec ladite surface interne dudit conduit (10).

6. Système de commande de purge (1) selon l'une quelconque des revendications précédentes, dans lequel ledit système de commande de purge comprend trois bras espacés (23) s'étendant radialement vers l'extérieur par rapport audit élément de fermeture allongé (20), et en contact coulissant avec ladite surface interne dudit conduit (10) pour positionner solidement ledit élément de fermeture dans ledit conduit (10).

7. Système de commande de purge (1) selon l'une quelconque des revendications précédentes, dans lequel chacun d'au moins un bras (23) comprend un tube allongé (24), constitué dudit matériau ferromagnétique, et orienté dans ladite direction longitudinale (L), et dans lequel ledit tube allongé (24) est en contact coulissant avec ladite surface interne dudit conduit (10).

8. Procédé de commande d'un système de commande de purge (1) selon l'une quelconque des revendications précédentes, ledit procédé comprenant les étapes consistant :
- à fournir ledit élément de fermeture (20) dans ledit premier état de sorte que ladite sortie (12) soit fermée et que ladite entrée (11) soit ouverte ;
- à permettre audit conduit (10) d'être rempli dudit fluide ;
- à actionner ladite pluralité d'enroulements électriques (30) entourant ledit conduit (10, 110) de sorte qu'un champ magnétique induit agisse sur ledit matériau ferromagnétique pour déplacer ledit élément de fermeture allongé dans ladite direction allongée (L) audit deuxième état, ouvrant ainsi ladite sortie (12) et fermant ladite entrée (11) ;
- à permettre audit fluide dans ledit conduit d'être délivré en sortie par ladite sortie ouverte (12) ;
- à déplacer ledit élément de fermeture dans ladite direction longitudinale (L) dudit deuxième état audit premier état.

9. Procédé selon la revendication 8, dans lequel ladite étape d'actionnement comprend le fait :
- de fournir un courant électrique à travers ladite pluralité d'enroulements électriques (30) entourant ledit conduit (10),

10. Procédé selon la revendication 8 ou 9, dans lequel, au cours de ladite étape d'actionnement, ledit élément de fermeture (20) est maintenu dans ledit deuxième état pendant un intervalle de temps prédéterminé.

11. Procédé selon l'une des revendications 8 à 10, dans lequel ladite étape d'actionnement est maintenue pendant 0,1 à 10 secondes, de préférence pendant 0,1 à 2 secondes, encore plus préférablement pendant 0,1 à 0,2 seconde.
